# FASCICULE DE BREVET EUROPEEN

(11) **EP 3 726 067 B1**
(45) Date de publication et mention de la délivrance du brevet: **20.07.2022**
(21) Numéro de dépôt: 20168677.1
(22) Date de dépôt: 08.04.2020
(51) Int. Cl.: F15B 13/02, B64C 13/00, G05D 11/00

(54) **VANNE FLUIDIQUE PASSIVE DE REPARTITION DE DEBITS FIXES**
PASSIVES FLÜSSIGKEITSVENTIL ZUR VERTEILUNG VON FESTEN DURCHSÄTZEN
PASSIVE FLUID VALVE FOR DISTRIBUTING FIXED FLOWS

(30) Priorité: 17.04.2019 BE 201905254
(43) Date de publication de la demande: 21.10.2020
(73) Titulaire: Safran Aero Boosters S.A., 4041 Herstal (BE)
(72) Inventeur: DESCLEE, Quentin, 4041 Herstal (BE); VANDENBROUCKE, Maxime, 4041 Herstal (BE)
(74) Mandataire: Gevers Patents

(56) Documents cités:
- GB-A- 852 687
- US-A- 2 266 921
- US-A- 2 643 664

## Description

### Domaine technique

L'invention se rapporte à une vanne fluidique à trois voies pour une répartition fixe et automatique de débits de sortie.

### Etat de la technique

Des vannes fluidiques proportionnelles sont connues et permettent de répartir un débit d'entrée vers au moins deux sorties en faisant varier un passage de fluide vers chacune des sorties proportionnellement à la position d'un élément mobile généralement appelé tiroir. Ainsi, il est possible de répartir des débits de sortie par rapport à un débit d'entrée en faisant varier la position du tiroir.

Pour un même réglage des passages de fluide vers chacune des sorties, des variations des pertes de charge des canalisations reliées aux sorties peuvent entrainer une modification de répartition des débits vers les sorties de la vanne. Une manière de conserver une même répartition de débit vers chacune des sorties est de réajuster les passages de fluide vers chacune des sorties afin de tenir compte des variations de perte de charge. Cela peut se faire par exemple en déplaçant le tiroir à l'aide d'un actionneur solénoïde, nécessitant donc l'utilisation d'une commande électrique. US 2 266 921 A décrit des moyens de vanne pour égaliser l'écoulement de fluide d'une source unique à une paire de moteurs à fluide, les moyens de vanne comprenant un logement ayant des orifices d'entrée et de sortie, un cylindre tapissant la surface intérieure du logement et comprenant les passages étroits, et des moyens sensibles à la pression qui sont sensibles à une différence entre la pression à un orifice de sortie et la pression à l'autre orifice de sortie pour faire varier le degré d'écoulement à travers les passages étroits vers les orifices de sortie. GB 852 687 A décrit une vanne de dosage de débit de fluide comprenant une conduite commune et deux conduites de dérivation, une vanne d'étranglement, un limiteur de débit, et des moyens moteurs.

### Résumé de l'invention

Selon un premier aspect, un des buts de la présente invention est de fournir une vanne fluidique passive permettant d'obtenir une répartition fixe d'un débit d'entrée entre deux sorties, sans devoir utiliser une commande électrique.

A cet effet, les inventeurs proposent la vanne fluidique suivante. Vanne fluidique passive pour un circuit hydraulique d'un équipement d'un aéronef et comprenant :
- un corps de vanne creux comprenant :
   ∘ une entrée,
   ∘ une première sortie comprenant une première restriction délimitant une cavité amont de première sortie et une cavité aval de première sortie,
   ∘ une deuxième sortie comprenant une deuxième restriction délimitant une cavité amont de deuxième sortie et une cavité aval de deuxième sortie,
   ∘ une première cavité,
   ∘ une deuxième cavité,
- un membre de vanne mobile dans le corps de vanne configuré pour obturer au moins partiellement un passage entre ladite entrée et une des deux sorties, et comprenant :
   ∘ une première extrémité située dans la première cavité de sorte à délimiter au moins partiellement une première et une troisième chambres dans ladite première cavité,
   ∘ une deuxième extrémité située dans la deuxième cavité de sorte à délimiter au moins partiellement une deuxième et une quatrième chambres dans ladite deuxième cavité,
ladite vanne fluidique comprenant :
- une première communication fluidique entre ladite première chambre et ladite cavité amont de première sortie ;
- une deuxième communication fluidique entre ladite troisième chambre et ladite cavité aval de première sortie ;
- une troisième communication fluidique entre ladite deuxième chambre et ladite cavité amont de deuxième sortie ;
- une quatrième communication fluidique entre ladite quatrième chambre et ladite cavité aval de deuxième sortie, caractérisée en ce que ladite entrée d'une part et lesdites première et deuxième sorties d'autre part sont positionnées en amont et en aval par rapport audit membre de vanne dans un sens normal d'écoulement de fluide lorsque la vanne fluidique est en fonctionnement.

Avec la vanne fluidique de l'invention, il est possible de prendre en compte automatiquement une variation de pression à l'une des sorties pour conserver une répartition des débits de sortie donnée. En d'autres termes, il est possible de répartir passivement des débits de sorties fixes quelles que soient les pertes de charge en aval des sorties.

La vanne fluidique de l'invention comprend une entrée et deux sorties ainsi qu'un membre de vanne servant d'organe de contrôle permettant de répartir le débit d'entrée entre ses sorties. Une restriction fixe est présente dans chacune des deux sorties. La perte de charge engendrée par chacune des première et deuxième restrictions fixes permet de créer une pression amont et une pression aval à chacune des restrictions de sorte que ces pressions agissent comme force hydraulique de part et d'autre des extrémités du membre de vanne. Cela est possible grâce aux première, deuxième, troisième et quatrième communications fluidiques telles que décrites ci-dessus. Lors d'un écoulement à l'équilibre, les pertes de charges dans les deux sorties sont constantes, ce qui induit une force résultante sur le membre de vanne qui est nulle. Une variation de pression dans une des sorties (due aux éléments en aval) entraînera une modification de la répartition de débits dans chacune des deux sorties. Puisque la répartition des débits est modifiée, les pertes de charges au niveau des premières et deuxième restrictions ne seront plus similaires, ce qui va créer une force résultante sur le tiroir jusqu'à ce que ces deux pertes de charges redeviennent égales (de sorte à atteindre la même répartition de débits entre les deux sorties que la répartition initiale), grâce à un changement de position du tiroir.

Avec la vanne fluidique de l'invention, la position de l'élément régulant (membre de vanne) s'ajuste sans besoin d'actionneur pour que la répartition de débit entre les deux sorties reste constante lors d'une variation des conditions hydrauliques en aval.

Avec la vanne fluidique de l'invention, il est possible d'avoir un répartiteur de débit passif ne nécessitant aucun système électronique. La vanne fluidique de l'invention est particulièrement robuste car elle ne comprend pas d'éléments électroniques ou d'actuateurs mécanique pour contrôler la position du membre de vanne. Ainsi, un des avantages de la présente invention est la capacité de régulation passive de la vanne, ce qui ne requiert aucun actionneur ni boucle de contrôle et réduit donc sa masse et ses coûts liés à l'actionneur et son électronique de contrôle. Un autre avantage de l'invention est qu'elle présente une complexité mécanique des éléments mobiles moins importante que pour une vanne active ce qui rend son fonctionnement également plus robuste.

La vanne fluidique de l'invention permet de conserver une répartition de débits fixe entre les deux sorties par l'action du membre de vanne. Ainsi, lors d'une diminution de débit dans la canalisation raccordée à la première sortie, il se produit au niveau des première et deuxième restrictions variables entre les première et deuxième sorties, une réduction de la deuxième restriction variable et une augmentation de la première dues à la modification des pressions des cavités amont et aval communiquées aux extrémités du membre de vanne par les communications fluidiques. Un tel mouvement du membre de vanne pour ajuster les première et deuxième restrictions variables permet de conserver une répartition de débits fixe entre les deux sorties. La diminution de débit dans la première canalisation entraine des modifications de pressions au niveau des cavités amont et aval qui sont automatiquement répercutées sur les extrémités du membre de vanne pour conserver cette répartition de débits fixe entre les deux sorties.

De préférence, la cavité amont de première sortie et la cavité aval de première sortie sont situées de part et d'autre de la première restriction. De préférence, la cavité amont de deuxième sortie et la cavité aval de deuxième sortie (44) sont situées de part et d'autre de la deuxième restriction.

De préférence, ledit membre de vanne est mobile dans le corps de vanne pour obturer au moins partiellement un passage entre ladite entrée et une des deux sorties.

De préférence les première et/ou deuxième restrictions sont des restrictions fixes. De préférence, la première sortie est une première canalisation de sortie qui comprend la cavité amont de première sortie et la cavité aval de première sortie. De préférence, la deuxième sortie est une deuxième canalisation de sortie qui comprend la cavité amont de deuxième sortie et la cavité aval de deuxième sortie.

La première chambre est comprise entre le corps de vanne et la face externe de la première extrémité du membre de vanne. La troisième chambre est comprise entre la première paroi interne du corps de vanne et la face interne de la première extrémité du membre de vanne. La deuxième chambre est comprise entre le corps de vanne et la face externe de la deuxième extrémité du corps de vanne. La quatrième chambre est comprise entre la deuxième paroi interne du corps de vanne et la face interne de la deuxième extrémité du corps de vanne.

De préférence, la cavité amont de première sortie est distincte de la cavité amont de deuxième sortie.

Selon l'invention, ladite entrée d'une part et lesdites première et deuxième sorties d'autre part sont positionnées en amont et en aval par rapport audit membre de vanne dans un sens normal d'écoulement de fluide lorsque la vanne fluidique est en fonctionnement. Une telle configuration permet d'avoir une vanne fluidique plus compacte. Une telle configuration permettrait une meilleure sensibilité au niveau de la prise en compte des variations de perte de charge en aval, c'est-à-dire dans les sorties. Dans une telle configuration, la position du membre de vanne n'influence pas la prise en compte des variations de perte de charge en aval.

De préférence, le corps de vanne creux comprend en outre :
∘ une première paroi interne comprenant une première ouverture et définissant au moins partiellement ladite première cavité,
∘ une deuxième paroi interne comprenant une deuxième ouverture et définissant au moins partiellement ladite deuxième cavité,
ledit membre de vanne traversant lesdites première et deuxième parois internes via leur première et deuxième ouvertures.

De préférence, le membre de vanne comprend en outre :une première et une deuxième portion intermédiaires configurées chacune pour obturer au moins partiellement un passage entre ladite entrée et une des deux sorties, de sorte que :
ladite première portion intermédiaire délimite au moins partiellement une première chambre intermédiaire avec ladite première paroi interne,
ladite deuxième portion intermédiaire délimite au moins partiellement une deuxième chambre intermédiaire avec ladite deuxième paroi interne.

Ce mode de réalisation permet d'avoir une réponse du membre de vanne en réponse à une modification des pressions qui permet un équilibrage des débits tel que défini par la géométrie de la vanne fluidique de l'invention. De préférence, la première portion intermédiaire du membre de vanne définit avec le corps de vanne, une première restriction variable entre l'entrée et la première sortie. De préférence, la deuxième portion intermédiaire du membre de vanne définit avec le corps de vanne, une deuxième restriction variable entre l'entrée et la deuxième sortie.

De préférence, il existe :
- une première communication fluidique intermédiaire entre ladite première chambre intermédiaire et ladite entrée, et ;
- une deuxième communication fluidique intermédiaire entre ladite deuxième chambre intermédiaire et ladite entrée.

Les première et deuxième communications fluidiques intermédiaires permettent un équilibrage des pressions entre les première et deuxième chambres intermédiaires et la pression en entrée ou vers les première et deuxième sorties.

De préférence, la première portion intermédiaire et la deuxième portion intermédiaire forment une première et une deuxième restrictions variables avec les premières et deuxièmes sorties respectivement.

Le but des première et deuxième portions intermédiaires est de former en fonction de leurs positions à l'intérieur du corps de vanne, deux restrictions variables vers les première et deuxième sorties. De préférence, les première et deuxième portions intermédiaires sont fixés au membre de vanne et forment des restrictions variables qui sont proportionnelles, c'est-à-dire que quelle que soit la position du membre de vanne et donc la position des première et deuxième portions intermédiaires dans le corps de vanne, la somme des sections de passage vers les première et deuxième sorties est constante.

De préférence, ladite première extrémité est ajustée dans ladite première cavité, et ladite deuxième extrémité est ajustée dans ladite deuxième cavité, de sorte que les première et deuxième chambres présentent des fuites très faibles, par exemple elles sont étanches, des troisième et quatrième chambre respectivement. Les fuites sont réduites au maximum pour éviter de perturber le fonctionnement de la vanne. Ajustée signifie qu'il existe un jeu entre le corps de vanne et les premières extrémités permettant un mouvement et une lubrification. Ajustée peut être interprété comme désignant un jeu nécessaire entre un piston dans un cylindre, par exemple de moteur à combustion.

Les premières et deuxième extrémités du membre de vanne sont des parois étanches dans les premières et deuxième cavités. L'étanchéité formée par ces parois est importante afin de garantir le bon fonctionnement de la vanne de l'invention. Une mauvaise étanchéité au niveau des parois provoquerait une mauvaise communication des pressions venant de part et d'autre des restrictions situées dans les sorties, et donc un mauvais fonctionnement de la vanne.

Préférentiellement,
- ladite première extrémité délimitant lesdites première et troisième chambres dans ladite première cavité a une section ayant une aire de première extrémité S1, et,
- ladite deuxième extrémité délimitant lesdites deuxième et quatrième chambres dans ladite deuxième cavité a une section ayant une aire de deuxième extrémité S2,
de sorte que ladite aire de première extrémité S1 est égale à ladite aire de deuxième extrémité S2.

Ce mode de réalisation est particulièrement avantageux car il permet d'avoir un membre de vanne symétrique et de fixer la répartition des débits de sorties sur la base des dimensions des passages des restrictions fixes R1 et R2. Ainsi il est possible d'utiliser la vanne de l'invention avec S1 = S2 de sorte à avoir un membre de vanne symétrique pour une grande plage de débits fixes entre les deux sorties en modifiant seulement les dimensions des passages des restrictions fixes R1 et R2. Cela est très avantageux car la modification de S1 et S2 nécessite la modification du membre de vanne et du corps de vanne alors que la modification des dimensions des passages des restrictions fixes R1 et R2 peut se faire facilement. Ainsi les première et deuxième restrictions peuvent être adaptées en fonction des besoins de répartition de débits entre les première et deuxième sorties.

Préférentiellement,
- ladite première extrémité délimitant lesdites première et troisième chambre dans ladite première cavité a une section ayant une aire de première extrémité S1, et,
- ladite deuxième extrémité délimitant lesdites deuxième et quatrième chambre dans ladite deuxième cavité a une section ayant une aire de deuxième extrémité S2,
de sorte que ladite aire de première extrémité S1 est plus grande que ladite aire de deuxième extrémité S2.

Par exemple, lorsque S1 est plus grande que S2, alors pour des passages des restrictions fixes R1=R2, la vanne de l'invention est configurée pour avoir une répartition des débits, tel que le débit est plus grand vers la deuxième sortie.

Préférentiellement, ladite première restriction a une première section de passage R1, et ladite deuxième restriction a une deuxième section de passage R2, de sorte que ladite première section de passage R1 est égale à ladite deuxième section de passage R2.

Par exemple, pour une répartition fixe d'un débit d'entrée de 100%, en des débits de sortie de 50% vers la première sortie et de 50% vers la deuxième sortie, alors il y a lieu de considérer S1 = S2 et R1 = R2. Il est intéressant de noter qu'une telle répartition des débits peut être atteinte avec S1 différent de S2 et R1 différent de R2, par exemple lorsque S2 est plus petit que S1 et que R2 est plus petit que R1 ou *vice versa.* Cependant, il est beaucoup plus simple de considérer S1 = S2 et R1 = R2 en terme de conception et de fabrication pour une telle répartition des débits de sorties.

Préférentiellement, ladite première restriction a une première section de passage R1, et ladite deuxième restriction a une deuxième section de passage R2, de sorte que ladite première section de passage R1 est plus grande que ladite deuxième section de passage R2.

Préférentiellement, ladite première restriction a une première section de passage R1, et ladite deuxième restriction a une deuxième section de passage R2, de sorte que ladite première section de passage R1 est plus petite que ladite deuxième section de passage R2.

Dans les deux modes de réalisation précédents, par exemple S1 = S2, de sorte que la répartition du débit entre les deux sorties est basé sur les dimensions des restrictions fixes R1 et R2 (R1 ≠ R2). Ainsi un plus grand débit est fixé vers la première sortie lorsque R1 est plus grand que R2 et *vice versa.*

On entend par force de déplacement une force qui a un sens et une direction selon une direction de déplacement possible du membre de vanne mobile. Le terme restriction ou 'restriction fixe' est connu d'un homme du métier. Différents types de restriction fixe peuvent être envisagés. Un exemple non limitatif est un orifice circulaire percé dans une paroi dont l'épaisseur est du même ordre de grandeur que son diamètre. D'autres exemples sont un coude, un rétrécissement de diamètre.

La vanne fluidique de l'invention présente d'autres avantages. Elle peut être moins chère que d'autres solutions existantes. Elle présenterait aussi de bonnes performances.

De préférence, ladite communication vers ladite pression externe comprend un filtre. Cela permet de répondre à un besoin de fluide propre.

De préférence, le membre de vanne a une symétrie de révolution.

La vanne fluidique de l'invention peut être utilisée avec différents fluides comme par exemple : de l'huile, de l'huile moteur, du carburant. La vanne fluidique de l'invention pourrait être utilisée avec d'autres fluides. De préférence, la vanne fluidique de l'invention comprend un ou plusieurs filtres ou dispositifs anti-pollution (joints, chemins de fuite par exemple) pour diminuer les risques de blocage du membre de vanne. La vanne fluidique de l'invention peut être utilisée dans un circuit hydraulique d'un équipement d'un aéronef comme par exemple : circuit hydraulique d'un train d'atterrissage.

Les inventeurs proposent également :
- un circuit hydraulique d'un équipement d'un aéronef (par exemple circuit hydraulique d'un train d'atterrissage),
- un système de pile à combustible,
- une turbomachine, et,
- un aéronef,
comprenant une ou plusieurs vannes fluidiques selon l'invention.

### Brève description des figures

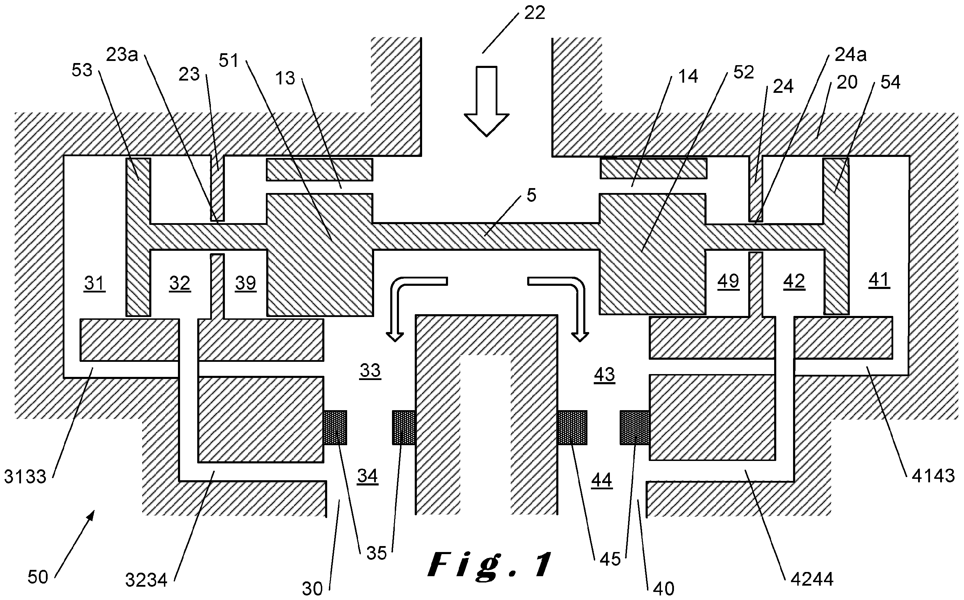

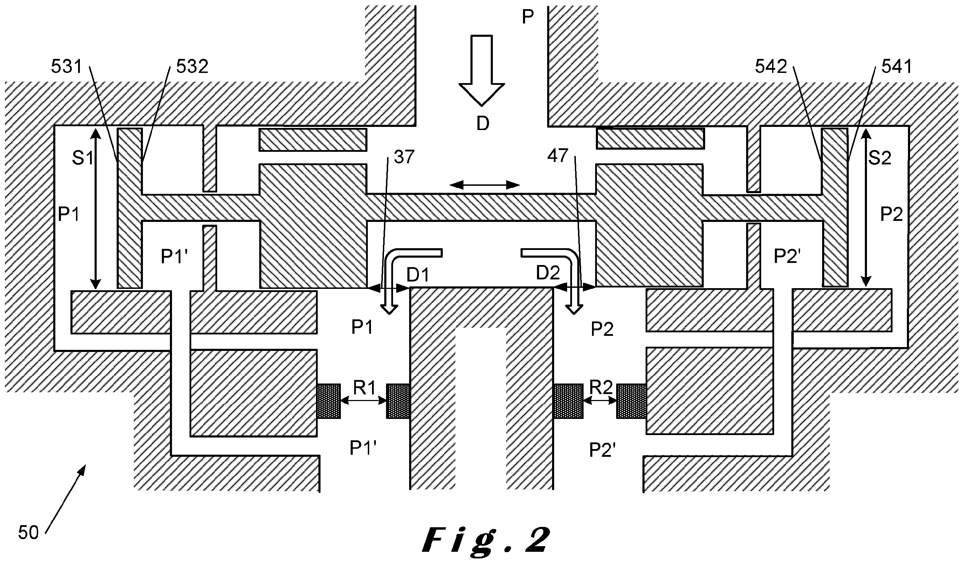

Ces aspects ainsi que d'autres aspects de l'invention seront clarifiés dans la description détaillée de modes de réalisation particuliers de l'invention, référence étant faite aux dessins des figures, dans lesquelles les Fig.1 et Fig.2 montrent un mode de réalisation possible de la vanne fluidique de l'invention, en particulier, la Fig.2 indique certaines variables physiques.

Les dessins des figures ne sont pas à l'échelle. Généralement, des éléments semblables sont dénotés par des mêmes références dans les figures. La présence de numéros de référence aux dessins ne peut être considérée comme limitative, y compris lorsque ces numéros sont indiqués dans les revendications.

### Description détaillée de certains modes de réalisation de l'invention

La figure 1 montre un exemple de mode de réalisation de la vanne fluidique 50 selon l'invention. Elle comprend un corps de vanne 20 creux et trois voies : une entrée 22, une première sortie 30 et une deuxième sortie 40. La première sortie 30 de la vanne 50 comprend une première canalisation de sortie qui comprend une première restriction 35. La première restriction 35 délimite une cavité amont de première sortie 33 et une cavité aval de première sortie 34 situées de part et d'autre de ladite première restriction 35. La deuxième sortie 40 de la vanne 50 comprend une deuxième canalisation de sortie qui comprend une deuxième restriction 45. La deuxième restriction 45 délimite une cavité amont de deuxième sortie 43 et une cavité aval de deuxième sortie 44 situées de part et d'autre de ladite deuxième restriction 45. La première restriction 35 dans la première sortie 30 permet une perte de charge entre la cavité amont de première sortie 33 et la cavité aval de première sortie 34 de sorte à avoir une indication concernant le débit dans la première sortie 30. Ainsi, comme indiqué dans la figure 2, la pression P1 dans la cavité amont de première sortie 33 est différente de la pression P1' dans la cavité aval de première sortie 34 de sorte qu'il existe une différence de pression entre P1 et P1'. P1 est plus grand que P1'.

Le corps de vanne 20 creux comprend une première paroi interne 23 comprenant une première ouverture 23a, la paroi interne 23 définissant au moins partiellement une première cavité. Le corps de vanne 20 creux comprend une deuxième paroi interne 24 comprenant une deuxième ouverture 24a, la paroi interne 24 définissant au moins partiellement une deuxième cavité.

La vanne fluidique 50 comprend un membre de vanne 5 comprenant une première extrémité 53 située dans la première cavité de sorte à délimiter au moins partiellement une première 31 et une troisième 32 chambres dans ladite première cavité, et une deuxième extrémité 54 située dans la deuxième cavité de sorte à délimiter au moins partiellement une deuxième 41 et une quatrième 42 chambres dans ladite deuxième cavité. Le membre de vanne traverse les première 23 et deuxième 24 parois internes via leur première 23a et deuxième 24a ouvertures.

Le membre de vanne 5 de la figure 1 comprend une première 51 et une deuxième 52 portions intermédiaires configurées chacune pour obturer au moins partiellement un passage entre ladite entrée 22 et une des deux sorties 30, 40. Dans le mode de réalisation de la figure 1, ladite première portion intermédiaire 51 et ladite première paroi interne 23 délimitent au moins partiellement une première chambre intermédiaire 39 et, ladite deuxième portion intermédiaire 52 et ladite deuxième paroi interne 24 délimitent au moins partiellement une deuxième chambre intermédiaire 49. La première portion intermédiaire 51 comprend une première communication fluidique intermédiaire 13 entre ladite première chambre intermédiaire 39 et ladite entrée 22, et la deuxième portion intermédiaire 52 comprend une deuxième communication fluidique intermédiaire 14 entre ladite deuxième chambre intermédiaire 49 et ladite entrée 22.

Le corps de vanne des figures 1 et 2 comprend :
- une première communication fluidique 3133 pour communiquer une pression P1 entre ladite première chambre 31 et ladite cavité amont de première sortie 33 ;
- une deuxième communication fluidique 3234 pour communiquer une pression P1' entre ladite troisième chambre 32 et ladite cavité aval de première sortie 34 ;
- une troisième communication fluidique 4143 pour communiquer une pression P2 entre ladite deuxième chambre 41 et ladite cavité amont de deuxième sortie 43 ;
- une quatrième communication fluidique 4244 pour communiquer une pression P2' entre ladite quatrième chambre 42 et ladite cavité aval de deuxième sortie 44.
Les communications fluidiques 3133, 3234, 4143, 4244 permettent un transfert des pressions P1, P1', P2, P2'. Les communications fluidiques 3133, 3234, 4143, 4244 ont des sections suffisantes pour que le transfert des pressions P1, P1', P2, P2' se fasse avec des pertes de charges négligeables.

Sur la figure 2 sont représentées les différentes variables de débit, de pression et de dimension de certains éléments de la vanne 50 de l'invention en fonctionnement. La vanne est en fonctionnement lorsqu'un débit D est imposé en entrée 20 de la vanne 50. Ainsi le débit D est réparti en un débit D1 vers la première sortie 30 et un débit D2 vers la deuxième sortie 40. Le débit D1 et le débit D2 sont fixés par la configuration de la vanne 50 de l'invention et en particulier par les dimensions des première 53 et deuxième 54 extrémités ainsi que des sections de passage des première 35 et deuxième 45 restrictions. La première extrémité 53 délimitant lesdites première 31 et troisième 32 chambres dans ladite première cavité a une section ayant une aire de première extrémité S1. La deuxième extrémité 54 délimitant lesdites deuxième 41 et quatrième 42 chambres dans ladite deuxième cavité a une section ayant une aire de deuxième extrémité S2. La première restriction 35 a une première section de passage R1, et ladite deuxième restriction 45 a une deuxième section de passage R2.

Comme cela est représenté en figures 1 et 2, le membre de vanne 5 est symétrique de sorte que les première 53 et deuxième 54 extrémités ont des sections d'aires S1 et S2 égales. La première extrémité 53 est symétrique par rapport à la deuxième extrémité 54. Cela permet d'avoir une répartition des débits entre la première 30 et la deuxième 40 sortie basée sur les dimensions relatives des première 35 et deuxième 45 sections de passage R1 et R2. En effet lorsque le membre de vanne est symétrique, c'est-à-dire que S1 est égal à S2, alors la position du membre de vanne 5 par rapport aux première 30 et deuxième 40 sorties est définie par le rapport entre les sections de passage R1 et R2 grâce aux différences de pression générées par les première 35 et deuxième 45 restrictions, tel que ΔP1= P1-P1' et ΔP2= P2-P2'. Ainsi ces différences de pression ΔP1 et ΔP2 agissent directement sur la première 53 et la deuxième 54 extrémité du membre de vanne. En effet, la pression P1 s'exerce sur la face externe 531 de la première extrémité 53 du membre de vanne 5 et la pression P1' s'exerce sur la face interne 532 de la première extrémité 53 du membre de vanne 5. Et, la pression P2 s'exerce sur la face externe 541 de la deuxième extrémité 54 du membre de vanne 5 et la pression P2' s'exerce sur la face interne 542 de la deuxième extrémité 54 du membre de vanne 5.

De façon générale, le fonctionnement de la vanne fluidique passive de l'invention repose sur un équilibrage automatique de ΔP1 = P1-P1' et ΔP2= P2-P2'. Lorsque ΔP1 = ΔP2 alors le membre de vanne 5 est à l'équilibre et la répartition des débits est celle définie par le dimensionnement de S1, S2, R1 et R2.= P2-P2'. On ne veut pas équilibrer P1 et P2, mais bien (P1-P1') et (P2-P2') (dans le cas où S1=S2 et où R1≠R2), car dans ce cas le tiroir est à l'équilibre, et la répartition de débits est celle souhaitée.

Dans les figures 1 et 2, la première restriction 35 de la première sortie 30 ayant une section R1 qui est plus grande que la deuxième restriction 45 de la deuxième sortie 40 ayant une section R2, alors :
- la pression P1 dans la cavité amont de première sortie 33 est plus grande qu'une pression P1' dans la cavité aval de première sortie 34. Ainsi le membre de vanne 5 subit une force de déplacement due à la pression P1 supérieure à la pression P1' de sorte que le membre de vanne 5 (configuré pour obturer au moins partiellement le passage entre l'entrée 22 et les sorties 30, 40) est apte à être déplacé de sorte à obturer d'avantage la première sortie 30 et à moins obturer la deuxième sortie 40 ;
- la pression P2 dans la cavité amont de deuxième sortie 43 est plus grande qu'une pression P2' dans la dans la cavité aval de deuxième sortie 34. Ainsi le membre de vanne 5 subit une force de déplacement due à la pression P2 supérieure à la pression P2' de sorte que le membre de vanne 5 (configuré pour obturer au moins partiellement le passage entre l'entrée 22 et les sorties 30, 40) est apte à être déplacé de sorte à obturer d'avantage la deuxième sortie 40 et à moins obturer la première sortie 30.

Ainsi, comme la première restriction 35 de la première sortie 30 à une section R1 plus grande que la section R2 de la deuxième restriction 45 de la deuxième sortie 40, alors, en partant par exemple d'une position du membre de vanne 5 avec 50 % de passage vers la première sortie 30 et 50 % de passage vers la deuxième sortie 40, la pression P2 est plus grande que la pression P1. Une telle différence de pression provoque alors une force de déplacement du membre de vanne 5 de sorte à équilibrer les pressions P1 et P2 en augmentant le passage vers la première sortie 30 et en diminuant par conséquence le passage vers la deuxième sortie 40. Cela provoque alors, une augmentation du débit D1 vers la première sortie 30 et une diminution du débit D2 vers la deuxième sortie 40. Une augmentation du débit D1 pour une même section R1 de première restriction 35 engendre une pression P1 plus grande et à l'inverse, une diminution du débit D2 pour une même section R2 de deuxième restriction provoque une diminution de pression P2. Ainsi le membre de vanne 5, par l'action des forces de déplacement dues aux pressions P1 et P2 trouve rapidement une position d'équilibre où les première 37 et deuxième 47 restrictions variables entre les première 30 et deuxième 40 sorties permettent l'équilibrage des pressions P1 et P2. Ce raisonnement doit être appliqué pour une pression P1' de cavité aval de première sortie 34 et une pression P2' de cavité aval de deuxième sortie 44 égale à P1' = P2', par exemple P1'=P2'=0 (sans perte de charge dans les canalisations aval aux première 30 et deuxième sorties 40).

Une modification des pertes de charges dans les canalisations aval aux première 30 et deuxième sorties 40, va modifier les pressions P1' et/ou P2'. Une telle modification de ces pressions va provoquer des forces de déplacement sur le membre de vanne 5 dues à l'action des pressions P1' et/ou P2' sur les première 53 et/ou deuxième 54 extrémités ainsi qu'une augmentation des pressions P1 et/ou P2 ainsi que de la pression d'entrée P.

Par exemple, dans le mode de réalisation des figure 1 et 2 où R1 est plus grand que R2, une augmentation de la perte de charge dans la canalisation aval à la première sortie 30, entraine principalement une augmentation de P1' et aussi une augmentation de P1 et de P en entrée 22. Cela a pour conséquence une augmentation de la force de déplacement de P1' sur le membre de vanne 5 de sorte à agrandir la première restriction variable 37 avec la première sortie 30, ce qui a pour conséquence un maintien du débit D1 vers la première sortie 30 et du débit D2 vers la deuxième sortie 40.

Le membre de vanne 5, indépendamment des exemples cités, définit une première restriction variable 37 entre l'entrée 22 et la première sortie 30 et une deuxième restriction variable 47 entre l'entrée 22 et la deuxième sortie 40.

Dans différents modes de réalisations, S1, S2, R1, et R2 peuvent être modifiés de sorte à définir une vanne 50 avec un débit d'entrée D=D1+D2, la vanne 50 ayant un ratio de débit d compris dans l'intervalle ]0 ; 1], de préférence, d compris entre 0,5 et 1 et de manière encore plus préférée, d compris entre 0,9 et 1 tel que :
- d = D1/D2 pour D1 compris dans l'intervalle ]0D ; 0,5D] et D2 compris dans l'intervalle [0,5D ; 1D[, et
- d = D2/D1 pour D1 compris dans l'intervalle [0,5D ; 1D[ et D2 compris dans l'intervalle ]0D ; 0,5D].

Par exemple D1=60% et D2=40%.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Vanne fluidique (50) passive pour un circuit hydraulique d'un équipement d'un aéronef et comprenant :
- un corps de vanne (20) creux comprenant :
∘ une entrée (22),
∘ une première sortie (30) comprenant une première restriction (35) délimitant une cavité amont de première sortie (33) et une cavité aval de première sortie (34),
∘ une deuxième sortie (40) comprenant une deuxième restriction (45) délimitant une cavité amont de deuxième sortie (43) et une cavité aval de deuxième sortie (44),
∘ une première cavité,
∘ une deuxième cavité,
- un membre de vanne (5) mobile dans le corps de vanne (20) configuré pour obturer au moins partiellement un passage entre ladite entrée (22) et une des deux sorties (30, 40), et comprenant :
∘ une première extrémité (53) située dans la première cavité de sorte à délimiter au moins partiellement une première (31) et une troisième (32) chambres dans ladite première cavité,
∘ une deuxième extrémité (54) située dans la deuxième cavité de sorte à délimiter au moins partiellement une deuxième (41) et une quatrième (42) chambres dans ladite deuxième cavité,
ladite vanne fluidique (50) comprenant :
- une première communication fluidique (3133) entre ladite première chambre (31) et ladite cavité amont de première sortie (33) ;
- une deuxième communication fluidique (3234) entre ladite troisième chambre (32) et ladite cavité aval de première sortie (34) ;
- une troisième communication fluidique (4143) entre ladite deuxième chambre (41) et ladite cavité amont de deuxième sortie (43) ; et
- une quatrième communication fluidique (4244) entre ladite quatrième chambre (42) et ladite cavité aval de deuxième sortie (44),
**caractérisée en ce que** ladite entrée (22) d'une part et lesdites première (30) et deuxième (40) sorties d'autre part sont positionnées en amont et en aval par rapport audit membre de vanne (5) dans un sens normal d'écoulement de fluide lorsque la vanne fluidique (50) est en fonctionnement.

2. Vanne fluidique (50) selon la revendication précédente **caractérisée en ce que** ladite cavité amont de première sortie (33) est distincte de ladite cavité amont de deuxième sortie (43).

3. Vanne fluidique (50) selon la revendication 1 ou 2 **caractérisée en ce que** le corps de vanne creux (20) comprend en outre :
∘ une première paroi interne (23) comprenant une première ouverture (23a) et définissant au moins partiellement ladite première cavité,
∘ une deuxième paroi interne (24) comprenant une deuxième ouverture (24a) et définissant au moins partiellement ladite deuxième cavité,
ledit membre de vanne (5) traversant lesdites première et deuxième parois internes (23, 24) via leur première et deuxième ouvertures (23a, 24a).

4. Vanne fluidique (50) selon la revendication précédente **caractérisée en ce que** le membre de vanne (5) comprend en outre :
- une première (51) et une deuxième (52) portions intermédiaires configurées chacune pour obturer au moins partiellement un passage entre ladite entrée (22) et une des deux sorties (30, 40), de sorte que :
ladite première portion intermédiaire (51) délimite au moins partiellement une première chambre intermédiaire (39) avec ladite première paroi interne (23), et
ladite deuxième portion intermédiaire (52) délimite au moins partiellement une deuxième chambre intermédiaire (49) avec ladite deuxième paroi interne (24).

5. Vanne fluidique (50) selon la revendication précédente **caractérisée en ce qu'**elle comprend :
- une première communication fluidique intermédiaire (13) entre ladite première chambre intermédiaire (39) et ladite entrée (22), et
- une deuxième communication fluidique intermédiaire (14) entre ladite deuxième chambre intermédiaire (49) et ladite entrée (22).

6. Vanne fluidique (50) selon l'une quelconque des deux revendications précédentes **caractérisée en ce que** la première portion intermédiaire (51) et la deuxième portion intermédiaire (52) forment une première (37) et une deuxième (47) restrictions variables avec les premières (30) et deuxièmes sorties (40) respectivement.

7. Vanne fluidique (50) selon l'une quelconque des revendications précédentes **caractérisée en ce que** ladite première extrémité (53) est ajustée dans ladite première cavité, et ladite deuxième extrémité (54) est ajustée dans ladite deuxième cavité, de sorte que les première (31) et deuxième (41) chambres, sont étanches des troisième (32) et quatrième (42) chambre respectivement.

8. Vanne fluidique (50) selon l'une quelconque des revendications précédentes **caractérisée en ce que** :
- ladite première extrémité (53) délimitant lesdites première (31) et troisième (32) chambres dans ladite première cavité a une section ayant une aire de première extrémité S1, et,
- ladite deuxième extrémité (54) délimitant lesdites deuxième (41) et quatrième (42) chambres dans ladite deuxième cavité a une section ayant une aire de deuxième extrémité S2,
de sorte que ladite aire de première extrémité S1 est égale à ladite aire de deuxième extrémité S2.

9. Vanne fluidique selon l'une quelconque des revendications 1 à 7 **caractérisée en ce que** :
- ladite première extrémité (53) délimitant lesdites première (31) et troisième (32) chambre dans ladite première cavité a une section ayant une aire de première extrémité S1, et,
- ladite deuxième extrémité (54) délimitant lesdites deuxième (41) et quatrième (42) chambre dans ladite deuxième cavité a une section ayant une aire de deuxième extrémité S2,
de sorte que ladite aire de première extrémité S1 est plus grande que ladite aire de deuxième extrémité S2.

10. Vanne fluidique (50) selon l'une quelconque des revendications précédentes **caractérisée en ce que** :
- ladite première restriction (35) a une première section de passage R1, et ladite deuxième restriction (45) a une deuxième section de passage R2,
de sorte que ladite première section de passage R1 est égale à ladite deuxième section de passage R2.

11. Circuit hydraulique pour un équipement d'un aéronef comprenant une vanne fluidique (50) selon l'une quelconque des revendications précédentes

12. Système de pile à combustible comprenant une vanne fluidique (50) selon l'une quelconque des revendications 1 à 9.

13. Turbomachine pour un aéronef comprenant une vanne fluidique (50) selon l'une quelconque des revendications 1 à 10.

14. Aéronef comportant une vanne fluidique (50) selon l'une quelconque des revendications 1 à 10.

## Patentansprüche

1. Passives Flüssigkeitsventil (50) für einen Hydraulikkreislauf einer Ausrüstung eines Flugzeugs und umfassend:
- einen hohlen Ventilkörper (20), umfassend:
- einen Eingang (22),
- einen ersten Ausgang (30), umfassend eine erste Beschränkung (35), die einen stromaufwärtigen Hohlraum eines ersten Ausgangs (33) und einen stromabwärtigen Hohlraum eines ersten Ausgangs (34) begrenzt,
- einen zweiten Ausgang (40), umfassend eine zweite Beschränkung (45), die einen stromaufwärtigen Hohlraum eines zweiten Ausgangs (43) und einen stromabwärtigen Hohlraum eines zweiten Ausgangs (44) begrenzt,
- einen ersten Hohlraum,
- einen zweiten Hohlraum,
- ein bewegliches Ventilbauteil (5) im Ventilkörper (20), das dazu ausgelegt ist, zumindest teilweise einen Durchgang zwischen dem Eingang (22) und einem der zwei Ausgänge (30, 40) zu versperren, und umfassend:
- ein erstes Ende (53), das derart im ersten Hohlraum gelegen ist, dass es zumindest teilweise eine erste (31) und eine dritte (32) Kammer im ersten Hohlraum begrenzt,
- ein zweites Ende (54), das derart im zweiten Hohlraum gelegen ist, dass es zumindest teilweise eine zweite (41) und eine vierte (42) Kammer im zweiten Hohlraum begrenzt,
wobei das Flüssigkeitsventil (50) umfasst:
- eine erste Flüssigkeitsverbindung (3133) zwischen der ersten Kammer (31) und dem stromaufwärtigen Hohlraum des ersten Ausgangs (33);
- eine zweite Flüssigkeitsverbindung (3234) zwischen der dritten Kammer (32) und dem stromabwärtigen Hohlraum des ersten Ausgangs (34);
- eine dritte Flüssigkeitsverbindung (4143) zwischen der zweiten Kammer (41) und dem stromaufwärtigen Hohlraum des zweiten Ausgangs (43); und
- eine vierte Flüssigkeitsverbindung (4244) zwischen der vierten Kammer (42) und dem stromabwärtigen Hohlraum des zweiten Ausgangs (44),
**dadurch gekennzeichnet, dass** einerseits der Eingang (22) und andererseits der erste (30) und der zweite (40) Ausgang in einer normalen Flüssigkeitsflussrichtung stromaufwärts und stromabwärts des Ventilbauteils (5) positioniert sind, wenn das Flüssigkeitsventil (50) betrieben wird.

2. Flüssigkeitsventil (50) nach dem vorstehenden Anspruch, **dadurch gekennzeichnet, dass** sich der stromaufwärtige Hohlraum des ersten Ausgangs (33) vom stromaufwärtigen Hohlraum des zweiten Ausgangs (43) unterscheidet.

3. Flüssigkeitsventil (50) nach Anspruch 1 oder 2, **dadurch gekennzeichnet, dass** der hohle Ventilkörper (20) weiter umfasst:
- eine erste Innenwand (23), die eine erste Öffnung (23a) umfasst und zumindest teilweise den ersten Hohlraum definiert,
- eine zweite Innenwand (24), die eine zweite Öffnung (24a) umfasst und zumindest teilweise den zweiten Hohlraum definiert,
wobei das Ventilbauteil (5) die erste und zweite Innenwand (23, 24) über deren erste und zweite Öffnung (23a, 24a) durchquert.

4. Flüssigkeitsventil (50) nach dem vorstehenden Anspruch, **dadurch gekennzeichnet, dass** das Ventilbauteil (5) weiter umfasst:
- einen ersten (51) und einen zweiten (52) Zwischenabschnitt, die jeweils dazu ausgelegt sind, zumindest teilweise einen Durchgang zwischen dem Eingang (22) und einem der zwei Ausgänge (30, 40) derart zu versperren, dass:
der erste Zwischenabschnitt (51) zumindest teilweise eine erste Zwischenkammer (39) mit der ersten Innenwand (23) begrenzt und der zweite Zwischenabschnitt (52) zumindest teilweise eine zweite Zwischenkammer (49) mit der zweiten Innenwand (24) begrenzt.

5. Flüssigkeitsventil (50) nach dem vorstehenden Anspruch, **dadurch gekennzeichnet, dass** es umfasst:
- eine erste Flüssigkeitszwischenverbindung (13) zwischen der ersten Zwischenkammer (39) und dem Eingang (22), und
- eine zweite Flüssigkeitszwischenverbindung (14) zwischen der zweiten Zwischenkammer (49) und dem Eingang (22).

6. Flüssigkeitsventil (50) nach einem der zwei vorstehenden Ansprüche, **dadurch gekennzeichnet, dass** der erste Zwischenabschnitt (51) und der zweite Zwischenabschnitt (52) eine variable erste (37) und eine variable zweite (47) Beschränkung mit dem ersten (30) bzw. dem zweiten Ausgang (40) bilden.

7. Flüssigkeitsventil (50) nach einem der vorstehenden Ansprüche, **dadurch gekennzeichnet, dass** das erste Ende (53) im ersten Hohlraum eingestellt wird und das zweite Ende (54) im zweiten Hohlraum eingestellt wird, sodass die erste (31) und die zweite (41) Kammer der dritten (32) bzw. vierten (42) Kammer gegenüber undurchlässig sind.

8. Flüssigkeitsventil (50) nach einem der vorstehenden Ansprüche, **dadurch gekennzeichnet, dass**:
- das erste Ende (53), das die erste (31) und die dritte (32) Kammer im ersten Hohlraum begrenzt, einen Teilabschnitt aufweist, der einen Bereich eines ersten Endes S1 aufweist, und
- das zweite Ende (54), das die zweite (41) und die vierte (42) Kammer im zweiten Hohlraum begrenzt, einen Teilabschnitt aufweist, der einen Bereich eines zweiten Endes S2 aufweist,
sodass der Bereich des ersten Endes S1 gleich dem Bereich des zweiten Endes S2 ist.

9. Flüssigkeitsventil (50) nach einem der Ansprüche 1 bis 7, **dadurch gekennzeichnet, dass**:
- das erste Ende (53), das die erste (31) und die dritte (32) Kammer im ersten Hohlraum begrenzt, einen Teilabschnitt aufweist, der einen Bereich eines ersten Endes S1 aufweist, und
- das zweite Ende (54), das die zweite (41) und die vierte (42) Kammer im zweiten Hohlraum begrenzt, einen Teilabschnitt aufweist, der einen Bereich eines zweiten Endes S2 aufweist,
sodass der Bereich des ersten Endes S1 größer ist als der Bereich des zweiten Endes S2.

10. Flüssigkeitsventil (50) nach einem der vorstehenden Ansprüche, **dadurch gekennzeichnet, dass**:
- die erste Beschränkung (35) einen ersten Durchgangsteilabschnitt R1 aufweist und die zweite Beschränkung (45) einen zweiten Durchgangsteilabschnitt R2 aufweist,
sodass der erste Durchgangsteilabschnitt R1 gleich dem zweiten Durchgangsteilabschnitt R2 ist.

11. Hydraulikkreislauf für eine Ausrüstung eines Flugzeugs, umfassend ein Flüssigkeitsventil (50) nach einem der vorstehenden Ansprüche.

12. Brennstoffzellensystem, umfassend ein Flüssigkeitsventil (50) nach einem der Ansprüche 1 bis 9.

13. Turbomaschine für ein Flugzeug, umfassend ein Flüssigkeitsventil (50) nach einem der Ansprüche 1 bis 10.

14. Flugzeug, umfassend ein Flüssigkeitsventil (50) nach einem der Ansprüche 1 bis 10.

## Claims

1. Passive fluidic valve (50) for a hydraulic circuit of a piece of equipment of an aircraft and comprising:
a hollow valve body (20) comprising:
an inlet (22);
a first outlet (30) comprising a first restriction (35) delimiting an upstream cavity of the first outlet (33) and a downstream cavity of the first outlet (34);
a second outlet (40) comprising a second restriction (45) delimiting an upstream cavity of the second outlet (43) and a downstream cavity of the second outlet (44);
a first cavity,
a second cavity,
- a valve member (5) movable in the valve body (20) configured to at least partially block a passage between said inlet (22) and one of the two outlets (30, 40), and comprising:
a first end (53) located in the first cavity so as to at least partially delimit a first (31) and a third chamber (32) in said first cavity,
a second end (54) located in the second cavity so as to at least partially delimit a second (41) and a fourth (42) chamber in said second cavity,
said fluidic valve (50) comprising:
- a first fluidic communication (3133) between said first chamber (31) and said upstream cavity of the first outlet (33);
- a second fluidic communication (3234) between said third chamber (32) and said downstream cavity of the first outlet (34);
- a third fluidic communication (4143) between said second chamber (41) and said upstream cavity of the second outlet (43); and
- a fourth fluidic communication (4244) between said fourth chamber (42) and said downstream cavity of the second outlet (44),
**characterised in that** said inlet (22) on the one hand and said first (30) and second (40) outlets on the other hand are positioned upstream and downstream with respect to said valve member (5) in a normal direction of fluid flow when the fluidic valve (50) is in operation.

2. Fluidic valve (50) according to the preceding claim, **characterised in that** said upstream cavity of the first outlet (33) is distinct from said upstream cavity of the second outlet (43).

3. Fluidic valve (50) according to claim 1 or 2, **characterised in that** the hollow valve body (20) further comprises:
a first inner wall (23) comprising a first opening (23a) and at least partially defining said first cavity,
a second inner wall (24) comprising a second opening (24a) and at least partially defining said second cavity,
said valve member (5) passing through said first and second inner walls (23, 24) via their first and second openings (23a, 24a).

4. Fluidic valve (50) according to the preceding claim, **characterised in that** the valve member (5) further comprises:
- a first (51) and a second (52) intermediate portion, each configured to at least partially block a passage between said inlet (22) and one of the two outlets (30, 40), such that:
said first intermediate portion (51) at least partially delimits a first intermediate chamber (39) with said first inner wall (23), and said second intermediate portion (52) at least partially delimits a second intermediate chamber (49) with said second inner wall (24).

5. Fluidic valve (50) according to the preceding claim, **characterised in that** it comprises:
- a first intermediate fluidic communication (13) between said first intermediate chamber (39) and said inlet (22), and
- a second intermediate fluidic communication (14) between said second intermediate chamber (49) and said inlet (22).

6. Fluidic valve (50) according to any of the two preceding claims, **characterised in that** the first intermediate portion (51) and the second intermediate portion (52) form a first (37) and a second (47) variable restriction with the first (30) and second (40) outlets respectively.

7. Fluidic valve (50) according to any of the preceding claims, **characterised in that** said first end (53) is fitted into said first cavity, and said second end (54) is fitted into said second cavity, so that the first (31) and second (41) chambers are sealed from the third (32) and fourth (42) chambers respectively.

8. Fluidic valve (50) according to any of the preceding claims, **characterised in that**:
- said first end (53) delimiting said first (31) and third (32) chambers in said first cavity has a section having a first end area S1, and
- said second end (54) delimiting said second (41) and fourth (42) chambers in said second cavity has a section having a second end area S2,
such that said first end area S1 is equal to said second end area S2.

9. Fluidic valve according to any of claims 1 to 7, **characterised in that**:
- said first end (53) delimiting said first (31) and third (32) chambers in said first cavity has a section having a first end area S1, and
- said second end (54) delimiting said second (41) and fourth (42) chambers in said second cavity has a section having a second end area S2,
such that said first end area S1 is larger than said second end area S2.

10. Fluidic valve (50) according to any of the preceding claims, **characterised in that**:
- said first restriction (35) has a first passage section R1, and said second restriction (45) has a second passage section R2,
such that said first passage section R1 is equal to said second passage section R2.

11. Hydraulic circuit for a piece of equipment of an aircraft comprising a fluidic valve (50) according to any of the preceding claims.

12. Fuel cell system comprising the fluidic valve (50) according to any of claims 1 to 9.

13. Turbomachine for an aircraft comprising a fluidic valve (50) according to any of claims 1 to 10.

14. Aircraft comprising a fluidic valve (50) according to any of claims 1 to 10.
